# EUROPÄISCHE PATENTANMELDUNG

(11) **EP 2 243 938 A1**
(43) Veröffentlichungstag der Anmeldung: **27.10.2010**
(21) Anmeldenummer: 10158191.6
(22) Anmeldetag: 29.03.2010
(51) Int. Cl.: F02B 29/04, F02M 35/10

(54) **Saugrohr für einen Verbrennungsmotor**

(30) Priorität: 06.04.2009 DE 102009016317
(71) Anmelder: Behr GmbH & Co. KG, 70469 Stuttgart (DE)
(72) Erfinder: Diem, Johannes, 71287 Weissach (DE); Kern, Josef, 73553 Alfdorf (DE)

(57) **Zusammenfassung**

Die Erfindung betrifft ein Saugrohr für einen Verbrennungsmotor, umfassend ein Gehäuse (1) mit einem Eintritt (2) für Ladeluft und zumindest einem Austritt (3) zum Anschluss des Saugrohrs an den Verbrennungsmotor, wobei insbesondere zumindest ein Teil des Gehäuses (1) aus einem Kunststoff besteht, wobei eine Gehäusewand (4) zumindest in einem Abschnitt mehrwandig ausgebildet ist, wobei die Gehäusewand (4) in dem Abschnitt zumindest eine Innenwand (6) und zumindest eine Außenwand (5) umfasst.

## Beschreibung

### Saugrohr für einen Verbrennungsmotor

Die Erfindung betrifft ein Saugrohr für einen Verbrennungsmotor nach dem Oberbegriff des Anspruchs 1.

Es ist bekannt, Saugrohre für Verbrennungsmotoren aus einem Kunststoff, insbesondere einem Polyamid, herzustellen, Soll das Saugrohr besonders hohen Ladelufttemperaturen oberhalb von 200 °C standhalten, ist es bekannt, einwandige Saugrohre aus teuren Materialien wie Polyphenylsuifid (PPS) oder Aluminium zu verwenden.

Es ist die Aufgabe der Erfindung, ein Saugrohr für einen Verbrennungsmotors anzugeben, das bei kostengünstiger Fertigung für hohe Temperaturen geeignet ist.

Diese Aufgabe wird für ein eingangs genanntes Saugrohr erfindungsgemäß mit den kennzeichnenden Merkmalen des Anspruchs 1 gelöst, Durch die zumindest abschnittsweise mehrwandige Ausbildung der Gehäusewand kann zumindest für die Außenwand eine ausreichend niedrige Materialtemperatur sichergesteilt werden, so dass auch bei hohen Ladelufttemperaturen ein kostengünstiges Material, bevorzugt ein Kunststoff, zumindest für die Außenwand Verwendung finden kann. Es versteht sich, dass die Erfindung grundsätzlich nicht ausschließt, dass das Saugrohr oder ein Teil davon auch aus hochwertigen Materialien wie etwa PPS oder Aluminium bestehen kann, Unter Ladeluft wird im Sinne der vorliegenden Erfindung wird allgemein das dem Verbrennungsmotor zugeführte Gas verstanden, sowohl mit als auch ohne Beimengungen wie etwa rückgeführtem Abgas.

Bei einer bevorzugten Ausführungsform der Erfindung bestehen die Innen∼ wand und die Außenwand aus dem Kunststoff. In besonders kostengünstiger Detailgestaltung sind dabei Innenwand und Außenwand als einstückiges Formteil ausgebildet Dabei kann es sich zum Beispiel um ein Spritzgußteil handeln. Alternativ oder ergänzend kann es sich auch um ein zusammengeschweißtes oder zusammengeflanschtes oder auf sonstige Weise nicht einstückiges Formteil handeln.

Bei einer bevorzugten Weiterbildung ist zwischen der Innenwand und der Außenwand ein von einem Fluid durchströrnbarer Hohlraum ausgebildet. Auf diese Weise kann Wärme aus dem Bereich zwischen den Wänden abgeführt werden, um eine ausreichend niedrige Temperatur zumindest der Außenwand sicherzustellen, Bei dem Fluid kann es sich dabei um ein flüssiges Kühlmittel, zum Beispiel eines Niedertemperatur-Kühlkreislaufs, handein, wodurch eine besonders effektive Kühlung erzielt wird. Alternativ kann es sich aber auch um ein gasförmiges Fluid wie etwa strömende Außenluft handein.

Alternativ zu einer solchen aktiven Kühlung mit einem strömenden Fluid kann je nach Anforderungen auch ein nicht von Kühlfluid durchströmter Hohlraum zwischen Außenwand und Innenwand vorliegen. Die durch den Hohlraum gegebene Isolierung bewirkt eine ausreichend niedrige Temperatur zumindest der Außenwand. Die Innenwand kann dabei durchaus Temperaturen annehmen, bei denen eine gewisse Materialerweichung vorliegt, wobei die mechanische Stabilität des Gehäuses durch die weniger erhitzte Außenwand sichergestellt wird.

Allgemein bevorzugt weist die Außenwand eine größere Dicke auf als die innenwand, so dass die mechanische Tragfähigkeit des Gehäuses vorrangig durch die Außenwand gegeben ist.

Bei einer bevorzugten Detailgestaltung sind zwischen der Außenwand und der Innenwand Stege ausgebildet, wodurch eine bessere mechanische Stabilität gegeben ist

Allgemein bevorzugt ist der Kunststoff ein Polyamid. Polyamide sind kostengünstig und mechanisch bis zu Temperalturbereichen um 180 °C stabil. Eine Zersetzung des Polyamids findet erst bei deutlich höheren Temperaturen statt, so dass es erfindungsgemäß ausreichend ist, für eine mechanisch tragende Gehäusewand, zum Beispiel die Außenwand, eine ausreichend niedrige Temperatur sicher zu stellen.

Bei einer Weiteren bevorzugten Ausführungsform der Erfindung ist die Innenwand als insbesondere metallisches Blechformteil ausgebildet. Bevorzugt besteht dabei die Außenwand aus einem Kunststoff und die Innenwand ist als metallisches Hitzeschutzblech, zum Beispiel aus nichtrostendem Stahl, ausgebildet, so dass trotz höherer Ladelufttemperaturen eine ausreichend niedrige Temperatur der Außenwand sichergestellt ist. Auch Ausführungsformen mit mehreren Kunststoffwänden und einem metallischen Hitzeschutzblech sind denkbar. Die Festlegung des Blechformteils an dem Saugrohr kann auf beliebige geeignete Weise erfolgen, zum Beispiel durch Einclipsen, Einsihweißen oder Einschrauben.

Bei einer allgemein vorteilhaften Ausführungsform der Erfindung ist ein Ladeluftkühler in dem Saugrohr angeordnet ist. Bei einer solchen Ausführungsform ist die mehrwandige Ausbildung der Gehäusewand bevorzugt stromaufwärts des Ladeluftkühlers, in besonders bevorzugter Detailgestaltung nur stromaufwärts des Ladeluftkühlers, vorgesehen. In weiterhin bevorzugter Detailgestaltung eines Saugrohr mit integriertem Ladeluftkühler kann eine Kühimitteldurchströmung des Ladeluftkühlers und eine Kühlmitteldurchströmung der Gehäusewand zwischen der innenwand und der Außenwand vorgesehen sein, wobei besonders bevorzugt gemeinsame Kühlmittelanschlüsse für die Durchströmungen vorgesehen sind. Auf diese Weise kann der bauliche Aufwand reduziert werden. Die Anschlüsse für das Kühlmittel können dabei je nach Anforderungen entweder nur an dem Ladeluftkühler oder nur an der Gehäusewand vorgesehen sein oder auch ein Anschluss an dem Ladeluftkühler und ein weiterer Anschluss an der Gehäusewand. Besonders bevorzugt können Wasserkästen des Ladeluftkühlers in das Gehäuse des Saugrohrs integriert sein.

Weiterhin voreilhaft erfolgt in dem Saugrohr oder stromaufwärts des Saugrohrs eine Einströmung von rückgeführtem Abgas des Verbrennungsmotors. Bei solchen Systemen mit Abgasrückführung tritt die Problematik einer zumindest zeitweise im Betrieb erhöhten Ladeiufttemperatur besonders zu Tage, so dass die erfindungsgemäße Ausgestaltung des Saugrohrs einen sicheren Betrieb mit kostengünstigen Bauteilen ermöglicht.

Weitre Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung beschrieben und anhand der anliegenden Zeichnungen näher erläutert.
- Fig. 1: zeigt eine schematische Schnittansicht eines ersten Ausführungs- beispiels der Erfindung.
- Fig. 2: zeigt eine schematische Schnittansicht eines zweiten Ausfüh- rungsbeispsels der Erfindung,

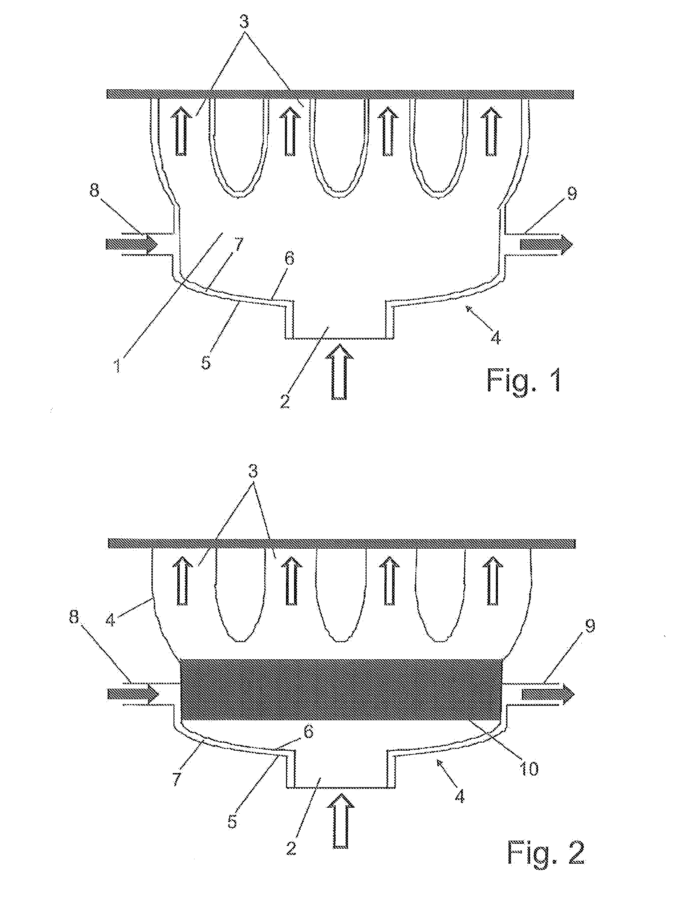

Bei dem ersten Ausführungsbeispiel nach Fig. 1 ist ein Saugrohr gezeigt, dass insgesamt als Spritzguss-Formteil aus einem Polyamid ausgebildet ist. Der Kunststoff kann auf bekannte Weise Zuschlagstoffe wie etwa Glasfasern, Keramikpartikel oder ähnliches zur Optimierung von mechanischer Festigkeit und/oder thermischer Leitfähigkeit aufweisen.

Das Saugrohr hat ein Gehäuse 1 mit einem Eintritt 2 für Ladeluft und verzweigt in vorlegend vier Austritte 3, die als Schwingrohre ausgebildet sind und jeweils an den Einlasskanal eines Zylinders eines Verbrennungsmotors (nicht dargestellt) anschließbar sind.

Das Gehäuse 1 hat eine Gehäusewand 4, die vorliegend über das gesamte Saugrohr doppelwandig mit einer Außenwand 5 und einer Innenwand 6 ausgebildet ist.

Innenwand 6 und Außenwand 5 schießen einen Hohlraum 7 ein, der von einem Fluid in Form eines flüssigen Kühlmittels eines Niederternperatur-Kühlkreislaufs durchströmt wird. Hierzu hat die Außenwand zwei Anschlüsse 8, 9 zur Zuführung und Abführung des zwischen den Wänden 6, 7 strömenden Kühlmittels.

Die Strömungen der Ladeluft und des Kühlmittels sind jeweils durch umrandete und gefüllte Pfeile veranschaulicht.

Die Ladeluft tritt im Bereich des Eintritts 2 zumindest zeitweise mit Temperaturen von mehr als 200 °C in das Saugrohr ein. Die Ladeluft steht in unmittelbarem Kontakt mit der Innenwand. Durch die Kühlung der Gehäusewände 5, 7 wird eine ausreichende mechanische Stabilität des Polyamids sichergestellt. Zumindest für die Außenwand wird dabei zu keiner Zeit eine Temperatur von mehr als 180 °C erreicht.

Bei dem zweiten Ausführungsbeisptel der Erfindung gemäß Fig. 2. ist innerhalb des Saugrohrs in einem Bereich zwischen Eintritt 2 und Austritten 3 ein indirekter Ladeluftluftkühler 10 angeordnet, der zur Abfuhr der Wärme der Ladeluft von einem flüssigen Kühlmittel durchströmt wird. Da die Ladeluft stromabwärts des Ladeluftkühlers 10 ausreichend niedrige Temperaturen aufweist, ist nur der Teil der Gehäusewand stromaufwärts des Ladeluftkühlers auf erfindungsgemäße Weise ausgestaltet, während stromabwärts eine herkömmliche, einwandige Ausbildung des Gehäuses vorliegt

Der Bereich stromaufwärts des Ladeluftkühlers 10 ist wie im ersten Ausführungsbeispiel als kühlmitteidurchströmter Hohlraum zwischen einer Innenwand 6 und einer Außenwand 5 des Gehäuses 1 ausgebildet.

Zweckmäßig durchströmt das gleiche Kühlmittel sowohl den Hohlraum 7 als auch den Ladeluftkühler 10, wobei vorliegend für beide Bereiche jeweils ein zuführender Anschluss 8 und ein abführender Anschluss 9 in der Außenwand 7 des Gehäuses vorgesehen ist, Der Ladeluftkühler ist, gegebenenfalls mittels nicht dargestellter Dichtungen, innerhalb des Gehäuses 1 an den Kühlmittelkreislauf angeschlossen. Auf diese Weise liegt eine integration der Kühlmittel-Anschlussstutzen 8, 9 für das Saugrohrgehäuse und den Ladeluftkühler 10 vor.

Es versteht sich, dass die einzelnen Merkmale der verschiedenen Ausführungsbeispiele je nach Anforderungen sinnvoll miteinander kombiniert werden können.

## Patentansprüche

1. Saugrohr für einen Verbrennungsmotor, umfassend ein Gehäuse (1) mit einem Eintritt (2) für Ladeluft und zumindest einem Austritt (3) zum Anschluss des Saugrohrs an den Verbrennungsmotor,
wobei insbesondere zumindest ein Teil des Gehäuses (1) aus einem Kunststoff besteht,
**dadurch gekennzeichnet,**
**dass** eine Gehäusewand (4) zumindest in einem Abschnitt mehrwandig ausgebildet ist, wobei die Gehäusewand (4) in dem Abschnitt zumindest eine innenwand (6) und zumindest eine Außenwand (5) umfasst.

2. Saugrohr nach Anspruch 1, **dadurch gekennzeichnet, dass** die Innenwand (6) und die Außenwand (5) aus dem Kunststoff bestehen und insbesondere als einstückiges Formteil ausgebildet sind.

3. Saugrohr nach Anspruch 2, **dadurch gekennzeichnet, dass** zwischen der Innenwand (6) und der Außenwand (5) ein von einem Fluid durchströmbarer Hohlraum (7) ausgebildet ist.

4. Saugrohr nach Anspruch 3, **dadurch gekennzeichnet, dass** das Fluid ein flüssiges Kühlmittel ist.

5. Saugrohr nach einem der Ansprüche 2 bis 4, **dadurch gekennzeichnet, dass** die Außenwand (5) eine größere Dicke aufweist als die Innenwand (5).

6. Saugrohr nach einem der Ansprüche 2 bis 5. **dadurch gekennzeichnet, dass** zwischen der Außenwand (5) und der Innenwand (6) Stege ausgebildet sind.

7. Saugrohr nach einem der vorhergehenden Anspruche, **dadurch gekennzeichnet, dass** der Kunststoff ein Polyamid ist.

8. Saugrohr nach einem der vorhergehenden Ansprüche, **dadurch gekennzeichnet, dass** die innenwand als insbesondere metallisches Blechformteil ausgebildet ist.

9. Saugrohr nach einem der vorhergehenden Ansprüche, **dadurch gekennzeichnet, dass** ein Ladeluftkühler (10) in dem Saugrohr angeordnet ist.

10. Saugrohr nach Anspruch 9, **dadurch gekennzeichnet, dass** die mehrwandige Ausbildung der Gehäusewand (4) stromaufwärts des Ladeluftkühlers (10), insbesondere nur stromaufwärts des Ladeluftkühlers (10), vorgesehen ist.

11. Saugrohr nach Anspruch 9 oder 10, **dadurch gekennzeichnet, dass** eine Kühlmitteldurchströmung des Ladeluftkühlers (10) und eine Kühlmitteldurchströmuhg der Gehäusewand (4) zwischen der Innenwand (6) und der Außenwand (5) vorgesehen ist, wobei insbesondere gemeinsame Kühimittelanschiüsse (8, 9) für die Durchströmungen vorgesehen sind.

12. Saugrohr nach einem der vorhergehenden Ansprüche, **dadurch gekennzeichnet, dass** in dem Saugrohr oder stromaufwärts des Saugrohrs eine Einströmung von rückgeführtem Abgas des Verbrennungsmotors erfolgt.
